**Europäisches Patentamt**

**European Patent Office**

**Office européen des brevets**

(11) Veröffentlichungsnummer: **0 264 070**
**A2**

# EUROPÄISCHE PATENTANMELDUNG

(21) Anmeldenummer: **87114713.8**

(22) Anmeldetag: **08.10.87**

(51) Int. Cl.⁴ **C08G 59/34** , **C08G 59/16** ,
**C08G 59/62** , **C08G 59/64** ,
**C09D 3/58**

(30) Priorität: **16.10.86 DE 3635285**

(43) Veröffentlichungstag der Anmeldung:
**20.04.88 Patentblatt 88/16**

(84) Benannte Vertragsstaaten:
**AT BE CH DE FR GB IT LI NL**

(71) Anmelder: **Henkel Kommanditgesellschaft auf**
**Aktien**
**Postfach 1100 Henkelstrasse 67**
**D-4000 Düsseldorf-Holthausen(DE)**

(72) Erfinder: **Fischer, Herbert, Dr.**
**Am Nettchesfeld 14**
**D-4000 Düsseldorf 13(DE)**
Erfinder: **Wegemund, Bernd, Dr.**
**Händelweg 3**
**D-5657 Haan 1(DE)**
Erfinder: **Gress, Wolfgang**
**Westfalenweg 247**
**D-5600 Wupertal-Elberfeld(DE)**
Erfinder: **Gorzinski, Manfred**
**Bogenstrasse 6**
**D-4000 Düsseldorf(DE)**

(54) **Lufttrocknendes Lackbindemittel auf Basis von Polyoctenylen.**

(57) Die Erfindung betrifft ein lufttrocknendes Lackbindemittel aus einem Ringöffnungsprodukt aus einem epoxidierten Polyoctenylen bzw. Cycloocten-Cycloen-Copolymerisat mit einem mittleren Molekulargewicht von 600 bis 3.000 und einer ungesättigten Carbonsäure mit 6 bis 22 C-Atomen oder einem Alkohol mit 2 bis 6 Hydroxygruppen oder einem Hydroxyalkylamin mit mindestens einer Hydroxyalkylgruppe, wobei die Hydroxygruppen der Alkohole bzw. der Hydroxyalkylamine mit einer ungesättigten Carbonsäure mit 6 bis 22 C-Atomen bis zu einer OH-Zahl von weniger 25 verestert sind und wobei das Ringöffnungsprodukt ein mittleres Molekulargewicht zwischen 1.500 und 10.000 und eine Säurezahl von 0,1 bis 20 aufweist. Die Erfindung betrifft weiterhin Verfahren zur Herstellung der genannten Lackbindemittel sowie deren Verwendung in lösemittelarmen Lacksystemen.

EP 0 264 070 A2

## Lufttrocknendes Lackbindemittel auf Basis von Polyoctenylen

Die Erfindung betrifft ein lufttrocknendes Lackbindemittel aus einem Ringöffnungsprodukt aus

(I) einem Epoxid eines ungesättigten Polymeren mit 1 bis 12 Gew.-% Epoxidsauerstoff, bezogen auf das Polymerengewicht, und

(IIa) einer ungesättigten Carbonsäure oder mehreren mit 6 bis 22 C-Atomen oder

(IIb) einem Alkohol oder mehreren mit 2 bis 6 Hydroxygruppen oder

(IIc) einem Hydroxyalkylamin oder mehreren mit mindestens einer Hydroxyalkylgruppe wobei die Hydroxygruppen der Alkohole bzw. Hydroxyalkylamine mit einer ungesättigten Carbonsäure oder mehreren mit 6 bis 22 C-Atomen bis zu einer OH-Zahl von weniger als 25 verestert sind und wobei das Ringöffnungsprodukt ein mittleres Molekulargewicht zwischen 1.500 und 10.000 und eine Säurezahl von 0,1 bis 20 aufweist.

Lufttrocknende Lackbindemittel der vorstehend genannten Art sind aus der EP-A 01 85 193 bekannt; dabei werden als ungesättigte Polymere unhydrierte und/oder teilweise hydrierte Polybutadiene, unhydrierte und/oder teilweise hydrierte Polyisoprene, Copolymere aus Butadien und Isopren, Polychloropren, Copolymere von Polybutadien mit Acrylnitril, Styrol, Ethen, Propen, Buten, i-Buten, Penten und Chloropren, Pentenamer, EPDM-Kautschuke, ungesättigte Kohlenwasserstoffharze, Cyclopentadienharze und Polynorbornen mit einem Zahlenmittel des Molekulargewichts im Bereich von 500 bis 5.000 eingesetzt.

Es wurde nun gefunden, daß beim Einsatz spezieller ungesättigter Polymere eine unerwartete Verbesserung der Resistenz der Lackbindemittel gegenüber Vergilbungen erreicht werden kann.

Demgemäß ist das lufttrocknende Lackbindemittel der Erfindung dadurch gekennzeichnet, daß das ungesättigte Polymer ein durch ringöffnende Polymerisation von Cyclooocten oder ringöffnende Copolymerisation von Cyclooocten und weiteren Cycloenen mit 5 bis 12 C-Atomen in Gegenwart von Metathesekatalysatoren gebildetes Polyoctenylen bzw. Cyclooocten-Cycloen-Copolymerisat mit einem mittleren Molekulargewicht von 600 bis 3.000 ist.

Die Erfindung betrifft weiterhin ein Verfahren zur Herstellung eines lufttrocknenden Lackbindemittels durch Ringöffnung epoxidierter, ungesättigter Polymerer mit einer ungesättigten Carbonsäure oder mehreren mit 6 bis 22 C-Atomen oder Alkoholen mit 2 bis 6 Hydroxygruppen oder Hydroxyalkylaminen mit mindestens einer Hydroxyalkylgruppe, wobei die bei der Verwendung der Alkohole oder Hydroxyalkylamine entstehenden Polyole mit einer ungesättigten Carbonsäure oder mehreren mit 6 bis 22 C-Atomen bis zu einer OH-Zahl von weniger als 25 verestert werden, und daß dadurch gekennzeichnet ist, daß man als ungesättigtes Polymer ein durch ringöffnende Polymerisation von Cyclooocten oder ringöffnende Copolymerisation von Cyclooocten und weiteren Cycloenen mit 5 bis 12 Kohlenstoffatomen in Gegenwart von Metathesekatalysatoren gebildetes Polyoctenylen bzw. Cyclooocten-Cycloen-Copolymerisats mit einem mittleren Molekulargewicht von 600 bis 3.000 verwendet.

Schließlich betrifft die Erfindung die Verwendung des lufttrocknenden Lackbindemittels zusammen mit üblichen Zusatzstoffen wie Sikkativen, Pigmenten, Pigmentdispergatoren, Hilfsstoffen und gegebenenfalls Reaktivverdünnern in lösemittelarmen Lacksystemen. Das erfindungsgemäß als ungesättigtes Polymere einsetzbare Polyoctenylen wird bei der Cycloooctenmetathese in Gegenwart von Wolframkatalysatoren, insbesondere $WCl_6$, gebildet, vgl. DE-OS 26 13 999, 20 28 935 und 20 51 799. Erfolgt die Polyoctylenmetathese in Gegenwart weiterer, einfach ungesättigter Cycloene, z.B. Cyclopenten, Cyclodecaen oder Cyclododecaen, die unter Metathesebedingungen polymerisierbar sind, erhält man Cyclooocten-Cycloen-Copolymerisate, die ebenfalls erfindungsgemäß einsetzbar sind.

Bevorzugt sind Polyoctenylene bzw. Cyclooocten-Cycloen-Copolymerisate mit Jodzahlen im Bereich von 80 bis 250, insbesondere 150 bis 250. Der trans-Gehalt beträgt vorzugsweise mindestens 45 %.

Polyoctenylene bzw. Cyclooocten-Cycloen-Copolymerisate der vorstehend genannten Art sind im Handel erhältlich, z.B. unter der Handelsbezeichnung VESTENAMER®.

Die Epoxidierung der erfindungsgemäß einzusetzenden Polyoctenylene bzw. Cyclooocten-Cycloen-Copolymerisate erfolgt analog zu derjenigen von Olefinen; das Epoxidationsverfahren ist wenig kritisch. Es können z.B. alle technisch üblichen Epoxidationsverfahren angewendet werden, z.B die Epoxidation mit Persäuren, wie Peressigsäure.

Wenngleich bei den lufttrocknenden Lackbindemitteln epoxidierte Polyoctenylene bzw. Cyclooocten-Cycloen-Copolymerisate mit 1 bis 12 Gew.-% Epoxidsauerstoff verwendet werden können, ist ein Epoxidsauerstoffgehalt von 2 bis 8 Gew.-% bevorzugt. Es können daher fast alle der in den ungesättigten Polymeren vorhandenen Doppelbindungen epoxidiert werden, wobei der Fachmann darauf zu achten hat, daß dann eine befriedigende Lufttrocknung durch einen entsprechend hohen Anteil ungesättigter Fettsäuren erreicht wird.

Das Molekulargewicht der epoxidierten Polymere als Ausgangverbindungen ist für die lufttrocknenden Lackbindemittel der Erfindung wenig kritisch. Es ist jedoch im Hinblick auf die Trocknungseigenschaften der Lacke und auf die Viskosität der Polymerlösungen erwünscht, innerhalb gewisser Grenzen zu arbeiten. So werden auf Basis epoxidierter Polymerer mit einem Zahlenmittel des Molekulargewichts von weniger als 500 nur langsam·trocknende Lackbindemittel erhalten, während bei einem Zahlenmittel des Molekulargewichts über 5.000 oder sogar über 10.000 zum Teil hochviskose Produkte entstehen, die sich nur schwer zu festkörperreichen Lacken verarbeiten lassen.

Die lufttrocknenden Lackbindemittel der Erfindung enthalten als Seitengruppen als Ester gebundene ungesättigte Carbonsäurereste. Die Carbonsäurereste gehen auf ungesättigte Carbonsäuren und deren Mischungen zurück. Es werden ungesättigte Carbonsäuren mit 6 bis 22 C-Atomen verwendet, wobei diese einzeln oder auch in Mischungen beliebigen Verhältnisses miteinander eingesetzt werden können. Bevorzugt sind die in natürlichen Fetten oder Ölen vorkommenden Mischungen gesättigter und ungesättigter Carbonsäuren mit 12 bis 22 C-Atomen, insbesondere mit 16 bis 22 C-Atomen, die eine Doppelbindung oder mehrere enthalten und gegebenenfalls auch gesättigte Beimengungen aufweisen können. Dabei wird von Carbonsäuremischungen ausgegangen, die eine Jodzahl von 50 bis 250, vorzugsweise von 100 bis 200, aufweisen. Besonders vorteilhaft sind Mischungen von Fettsäure, nativen Fetten oder Ölen, z.B. Gemische von Fettsäuren aus Palmöl, Erdnußöl, Baumwollsaatöl, Sojabohnenöl, Sonnenblumenöl, Leinöl, Rüböl, Ricinenfett, tierischen Fetten oder seetierischen Fetten.

Die zur Modifizierung der lufttrocknenden Lackbindemittel der Erfindung eingesetzten Carbonsäuren oder Carbonsäuremischungen können weiterhin aromatisch ungesättigte Carbonsäuren enthalten. Um den lufttrocknenden Charakter nicht zu stören, ist jedoch für die aromatischen Carbonsäuren eine Obergrenze bei 50 Gew.-% der gesamten Carbonsäuremischung anzusetzen, vorzugsweise werden nur 25 Gew.-% oder auch nur 10 Gew.-% aromatisch ungesättigte Carbonsäuren verwendet. Bevorzugte aromatisch ungesättigte Carbonsäuren sind Benzoesäure, Salicylsäure und deren alkylsubstituierte Derivate. Bei der Verwendung von Salicylsäure ist darauf zu achten, daß die OH-Zahl der lufttrocknenden Bindemittel unter 25 bleibt, um die Wasserfestigkeit zu gewährleisten. Von den alkylsubstituierten Benzoesäuren und oder Salicylsäuren sind Derivate geeignet, die eine oder bis zu 3 Methyl-, Ethyl-, Propyl-, Butyl-, Isobutyl-oder Tertiärbutylgruppen aufweisen.

Die lufttrocknenden Lackbindemittel der Erfindung enthalten die Monocarbonsäuren entweder direkt über Estergruppen an das Polymergerüst gebunden oder über eine Zwischengruppe, die sich von einem mehrfunktionellen Alkohol oder einem Hydroxyalkylamin ableitet. Als mehrfunktionelle Alkohole, d.h. als Alkohole mit 2 oder mehr Hydroxygruppen, sind hier aliphatische Alkohole mit 2 bis 6 Hydroxygruppen geeignet, die 2 bis 12 C-Atome aufweisen und bis zu 3 Ether-Sauerstoffatome enthalten können. So können als difunktionelle Alkohole beispielsweise die in der Lackindustrie üblichen Diole wie Ethylenglykol, Propylenglykol, Neopentylglykol oder deren Di-und Trimere mit 2 bzw. 3 Ether-Sauerstoffbrücken im Molekül eingesetzt werden. Geeignete Triole sind Glycerin, Trimethylolethan oder Trimethylolpropan. Geeignete Alkohole der Funktionalität 4 sind beispielsweise Pentaerythrit oder die Dimeren der genannten Triole. Ein aliphatischer Alkohol mit 6 OH-Gruppen ist beispielsweise Sorbitan; es können jedoch auch die Tetrameren der zuvor genannten Triole mit 3 Ether-Sauerstoffbrücken im Molekül verwendet werden.

Als Hydroxyalkylamine verwendbar sind diejenigen Amine, die am N-Atom mindestens eine Hydroxyalkylgruppe tragen. Bevorzugt sind z.B. Monoethanolamin oder Diethanolamin.

Die lufttrocknenden Lackbindemittel der Erfindung weisen zweckmäßigerweise ein Gesamtmolekulargewicht zwischen 1.500 und 10.000 auf; bevorzugt ist ein Bereich von 1.500 bis 5.000. Beim Unterschreiten des unteren Grenzwertes verlängern sich die Trocknungszeiten; bei höheren Molekulargewichten steigt die Viskosität an und es können daher nur noch schwer festkörperreiche Lacke hergestellt werden. Die genannten Molekulargewichte sind Zahlenmittel; man erhält sie aus dem über die aus den kolligativen Eigenschaften oder unter anderen Parametern bestimmbaren Molekulargewichte der eingesetzten Polymere, dem Epoxidationsgrad und dem Molekulargewicht der eingesetzten Modifizierungsmittel.

Bevorzugte Modifizierungsmittel sind mehrwertige Alkohole wie Trimethylolpropan, Ditrimethylolpropan und Glycerin.

Zur Herstellung der lufttrocknenden Lackbindemittel der Erfindung wird von Polyoctenylen bzw. Cycloocten-Cycloen-Copolymerisaten ausgegangen, die zunächst wie oben angegeben epoxidiert werden. Die Epoxide werden dann mit den ungesättigten Carbonsäuren bzw. den Mischungen derselben umgesetzt. Falls Produkte hergestellt werden sollen, die zwischen dem Polymergrundkörper und dem ungesättigten Carbonsäurerest ein Zwischenglied auf Basis eines mehrfunktionellen aliphatischen Alkohols oder eines Hydroxyalkylamins enthalten, werden die epoxidierten Polymere zunächst mit den entsprechenden Alkoholen bzw. Hydroxyalkylaminen umgesetzt und dann anschließend mit den ungesättigten Carbonsäuren oder den Mischungen derselben verestert. Die Umsetzung der Polymeren, z.B. von Polyoctenylen, mit einer

3

ungesättigten Carbonsäure oder mehreren findet bei Temperaturen zwischen 200 und 25° C, vorzugsweise um 230° C statt. Zweckmäßigerweise wird die Reaktion unter Inertgasen wie Stickstoff durchgeführt; das Reaktionswasser wird entfernt. Für die Veresterung geeignete übliche Katalysatoren können hier eingesetzt werden. Geeignete Katalysatoren sind z.B. metallorganische Verbindungen der Elemente Zinn oder Titan. Besonders geeignet sind zinnorganische Verbindungen, z.B. saure zinnorganische Verbindungen.

Als besonders geeignet hat sich ein Katalysator mit der Handelsbezeichnung Swedcat 3 von der Firma Swedstab AB erwiesen, dabei handelt es sich um eine saure zinnorganische Verbindung. Die Umsetzung kann in Substanz im Stickstoffstrom oder auch in einem geeigneten Lösungsmittel durchgeführt werden. Geeignete Lösemittel, mit denen das bei der Veresterung entstehende Wasser entfernt werden kann, sind hochsiedende Kohlenwasserstoffe, z.B. Xylol. Pro mol Epoxidgruppen können bis zu 2 mol Fettsäuren eingesetzt werden. Es hat sich als günstig erwiesen, mehr als 1 mol, jedoch weniger als 2 mol Fettsäuren einzusetzen, z.B. 1,7 bis 1,9 mol Fettsäure pro mol Epoxidgruppen. Übliche Reaktionsdauer der Umsetzung ist in Abhängigkeit von Katalysator und Temperatur zwischen 2 und 12 Stunden. Es hat sich gezeigt, daß bei einem molaren Unterschuß von 15 bis 20%, bezogen auf die Äquivalenz 2 mol Fettsäure pro mol Epoxidgruppe, Produkte erhalten werden, die sowohl eine geringe OH-Zahl als auch eine geringe Säurezahl aufweisen; dagegen bleiben bei direkter Äquivalenz mehr oder weniger große Mengen an Carbonsäuregruppen übrig, und man erhält auf diese Weise eine störende Säurezahl.

Zur Herstellung der lufttrocknenden Lackbindemittel der Erfindung mit mehrfunktionellen Alkoholen oder Hydroxyalkylaminen als Brücke zwischen dem ungesättigten Polymerteil und den ungesättigten Carbonsäuren bzw. Carbonsäuremischungen werden die epoxidierten ungesättigten Polymeren zunächst mit den mehrfunktionellen Alkoholen bzw. mit Hydroxyalkylamin umgesetzt. Die Reaktion kann mit Basen, z.B. Alkali-oder Erdalkalihydroxiden oder auch mit tertiären Aminen, katalysiert werden. Die Reaktionstemperaturen liegen zwischen 150 und 200° C, insbesondere zwischen 160 und 180° C, wobei die Reaktionszeiten im Bereich von einigen Stunden liegen. Um besonders günstige Produkte zu erhalten, ist es bei dieser Reaktion angezeigt, den Katalysator und den mehrfunktionellen Alkohol bzw. das Hydroxyalkylamin im Reaktionsgefäß vorzulegen und das epoxidierte ungesättigte Polymere im Verlauf der Reaktion als solches oder in Lösung kontinuierlich oder portionsweise zuzugeben. zur Entfernung des basischen Katalysators kann dieser mit Säuren, z.B. mit HCl, neutralisiert und dann z.B. durch Heißfiltration abgetrennt werden. Die so hergestellten hydroxylgruppenhaltigen Verbindungen auf Basis von Polyoctenylen bzw. CyclooctenCycloen-Copolymerisaten werden mit ungesättigten Monocarbonsäuren erschöpfend verestert, bis die OH-Zahl unter 25, insbesondere unter 15 oder vorzugsweise unter 10 gefallen ist. Die Veresterung kann in überlicher Weise katalysiert werden. So können auch hier beispielsweise zinnorganische Verbindungen oder titanorganische Verbindungen, insbesondere saure zinnorganische Verbindungen, eingesetzt werden.

In jedem Falle wird angestrebt, möglichst sämtliche OH-Gruppen zu verestern, die Rest-OH-Zahl unter 25, ja sogar unter 5 zu halten und die Restsäurezahl ebenfalls unter 15, insbesondere unter 10 und vorzugsweise unter 5 zu halten.

Die Lackbindemittel der Erfindung sind in lufttrocknenden Lacken einsetzbar. Dazu werden sie mit den bei Alkydharzen, insbesondere lufttrocknenden Alkydharzen, üblichen Hilfsstoffen versehen. So können Lacke auf Basis der erfindungsgemäßen Produkte, gegebenenfalls Pigmente, Pigmentdispergatoren. Filmbildungs-und Verlaufhilfsmittel oder Haftvermittler enthalten. In jedem Falle ist es angezeigt, die bei Alkydharzen üblichen Sikkative oder Sikkativgemische und/oder Antihautmittel einzusetzen. Geeignet sind Sikkative auf Basis von Verbindungen des Aluminiums, des Cobalts, des Bleis, des Mangans, des Zirkons oder von weiteren, dem Fachmann in diesem Zusammenhang geläufigen Übergangsmetallen. Günstige Ergebnisse werden mit Sikkativen erhalten, die sowohl Aluminium als auch Zirkon enthalten. Wichtige Aluminiumverbindungen sind die Aluminium-mono-acetylacetonat-dialkoholate. Die Sikkative werden in üblichen Mengen eingesetzt. So wird normalerweise auf 100 g Harz 0,4 g einer 6 %igen (Gew.-% Co) Cobaltsalzlösung oder 2,5 g einer 6 %igen (Gew.-Teile Zr) Zirkonsalzlösung eingesetzt.

Lösungen der lufttrocknenden Lackbindemittel der Erfindung in üblichen Lacklösemitteln wie aliphatischen oder aromatischen Kohlenwasserstoffen mit unterschiedlichen Siedepunkten zeichnen sich durch eine vergleichsweise niedrige Viskosität aus. So können mit Hilfe der Produkte der Erfindung streich-und spritzbare Lacke hergestellt werden, die mehr als 60 Gew.-%, vorzugsweise mehr als 75 Gew.-% und in Einzelfällen bis zu 90 Gew.-% und mehr, Festkörper enthalten. Auch hier sind streichbare lösemittelfreie Lacke (full-solid-Lacke) herstellbar.

Gemäß einer bevorzugten Ausführungsform der Erfindung können die lufttrocknenden Lackbindemittel der Erfindung zu Lösungen verarbeitet werden, bei denen ein Teil des Lösemittels durch sogenannte Reaktivverdünner ersetzt ist. Unter Reaktivverdünnern sind Produkte zu verstehen, die einerseits die Viskosität der Zubereitung wie ein Lösemittel herabsetzen, andererseits aber aufgrund ihrer Reaktivität, hier ihre Reaktivität im Zusammenhang mit der Lufttrocknungsreaktion, in den Lackfilm fest eingebaut werden.

Geeignete Reaktivverdünner, die mit den Lackbindemitteln der Erfindung zusammen verwendet werden können, sind Polybutadiene, z.B. cis-1.4-Polybutadien sowie ungesättigte Ester. An ungesättigten Estern sind in erster Linie die Ester α,β-ungesättigter Carbonsäuren, beispielsweise Acryl-oder Methacrylsäure mit ungesättigten Fettalkoholen, z.B. mit ungesättigtem Oleylalkohol, zu nennen. Weiter geeignet sind auch die Ester ungesättigter Fettsäuren mit ungesättigten Diolen, z. B. Ester einer destillierten Sonnenblumenölfettsäure mit hohem Anteil an Ölsäure und Linolsäure mit dem ungesättigten Diol Butendiol. Bei Verwendung derartiger Reaktivverdünner, die ja zum Festkörper gerechnet werden können, entstehen Lackzubereitungen, bei deren Trocknung nur noch 25 Gew.-% Lösemittel frei werden, in Einzelfällen nur 10 oder noch weniger Gew.-%. Wie sich aus den Beispielen ergibt, gestattet die Erfindung die Herstellung von Lacken mit einem typischen Alkydharz-Anwendungsprofil und dem Vorteil eines hohen Feststoffgehaltes, also einer nur noch geringen Lösemittelfreisetzung bei der Verarbeitung.

Die Erfindung wird im folgenden anhand bevorzugter Ausführungsbeispiele näher erläutert.

Beispiel 1.

Epoxidation eines Polyoctenylens.

Kenndaten des Polyoctenylens: trans-Gehalt:    61 62 %
Zahlenmittel des Molekulargewichts:    1840 g/mol
Jodzahl:    241 g J$_2$/100 g

Ansatz:
300 g Polyoctenylen
100 ml Testbenzin 110 - 140° C
12 g Ameisensäure (85 %-ig)
55 g Wasserstoffperoxid (70 %-ig)

Temperatur: 55° C

Zeit: 1 h Eintropfzeit
2 h Nachreaktion

Ausführung:

In einer Rührapparatur mit Kühler, Thermometer, Heizung. Kühlmöglichkeit und Tropftrichter wurden das Polyoctenylen, das Testbenzin und die Ameisensäure vorgelegt. Nach dem Erwärmen wurde das Wasserstoffperoxid unter Kühlen zugetropft; die Reaktion verlief exotherm. Nach Beendigung der Reaktion wurde der Ansatz 4 [x] mit ca. 600 ml heißem Wasser bei 90 - 95° C gewaschen. Danach war der Ansatz so gut wie säurefrei (pH 5-6); er wurde im Vakuum (20 mm Hg) bei 80 - 100° C getrocknet. Es wurde ein klares Produkt erhalten, das 3,5 % Epoxidsauerstoff enthält.

Beispiel 2.

Das Beispiel 1 wurde wiederholt, wobei jedoch die zweifache Menge Ameisensäure und die zweifache Menge Wasserstoffperoxid eingesetzt wurde. Man erhielt ein Produkt mit einem Epoxidsauerstoffgehalt von 8,2 %.

Beispiel 3.

Kenndaten des Polyoctenylens: trans-Gehalt:    ca. 72 %
Zahlenmittel des Molekulargewichts:    1440 g/mol

Das Polyoctenylen wurde wie in Beispiel 1 beschrieben epoxidiert. Man erhielt ein Produkt mit einem Epoxidsauerstoffgehalt von 3,55 %.

Beispiel 4.

Kenndaten des Polyoctenylens: Handelsprodukt VESTENAMER© 8012
80 % trans-Gehalt ·

Es wurde wie in Beispiel 2, jedoch unter Verwendung von 4 l n-Heptan als Lösemittel epoxidiert. Man erhielt ein Produkt mit einem Epoxidsauerstoffgehalt von 4,8 %.

Beispiel 5. Veresterung des in Beispiel 1 erhaltenen epoxidierten Polyoctenylens mit Sonnenblumenfettsäure (EDENOR© SbO5. Henkel)

Ansatz:
200 g epoxidiertes Polyoctenylen (3,5 % EpO)
208 g EDENOR SbO5 (85 %, bez. auf EpO)
1,2 g Swedcat 3
80 ml Xylol/N₂-Strom

Reaktionstemperatur: 195° C

Reaktionszeit: ca. 12 Stunden

Der Ansatz wurde in einer Rührapparatur mit Heizung, Kühler, Wasserabscheider und Thermometer vorgelegt und bei 195° C azeotrop verestert. Nachdem sich 6 ml Kondensat gebildet hatten, wurde das Xylol abdestilliert; man erhielt ein Harz mit einer Säurezahl von 8,5 mgKOH/g.
Plate + Cone-Viskosität 25° C, Firma Epprecht: DIN 53229

| $D$ in $s^{-1}$ | m.Pa.s. |
|---|---|
| 1250 | 4960 |
| 625 | 6080 |
| 313 | 6080 |

$$n^{20} = 1,4856$$

Beispiel 6. Veresterung des im Beispiel 2 erhaltenen Produktes;
Veresterungsbedingungen analog Beispiel 5.

Ansatz:
150 g epoxidiertes Polyoctenylen (8,2 % EpO)
300 g EDENOR SbO5 (70 %, bez. auf EpO)
1,5 g Swedcat 3
80 ml Xylol/N₂-Strom

Kondensatbildung: 8,2 ml

Man erhielt ein Harz mit einer SZ von 8,2 mg KOH/g.

Beispiel 7. Veresterung des in Beispiel 3 erhaltenen Produktes;
Veresterungsbedingungen analog Beispiel 5.

Ansatz:
250 g epoxidiertes Polyoctenylen (3,55 % EpO)
264 g EDENOR SbO5 (85 %, bez. auf EpO)
1,5 g Swedcat 3
100 ml Xylol/$N_2$-Strom

Kondensatbildung: 7.5 ml

Man erhielt ein Harz mit einer SZ von 9,5 mg KOH/g
Plate + Cone-Viskosität der Firma Epprecht: DIN 53229

| D in $s^{-1}$ | m.Pa.s. |
|---|---|
| 3750 | 2376 |
| 2500 | 2840 |
| 1250 | 3440 |
| 625 | 3520 |
| 313 | 3520 |

Beispiel 8.

Mit dem Produkt des Beispiels 7 wurde ein Weißlack gemäß folgender Rezeptur hergestellt:

476 Gew.-Teile Lackbindemittel
400 Gew.-Teile Titandioxid (Kronos CL310)
4 Gew.-Teile Ca-octoat 4 % Ca
2 Gew.-Teile Co-octoat 6 % Co
10 Gew.-Teile Zr-octoat 6 % Zr
100 Gew.-Teile Testbenzin
10 Gew.-Teile Methylethylketoxim (Dehydril NRC, Henkel)
Der Festkörpergehalt dieser Rezeptur betrug ca. 87 %.
Die Prüfergebnisse des so erhaltenen Weißlacks ergeben sich aus der folgenden Tabelle; als Vergleichsbeispiel diente ein Weißlack gemäß Beispiel 1, Nr 8, der EP-A 01 85 193.
Es ergibt sich aus der Tabelle, daß der mit dem Lackbindemittel der Erfindung hergestellte Weißlack bessere Elastizität, günstigere Eigenschaften im Vergilbungstest und bessere Glanzhaltung bei dem Schnellbewitterungstest zeigt.

Tabelle

Weißlackfilme: Filmdicke 35 - 40 µm

| Weißlacke auf Basis | | Bsp. 7 | Vergleichsbeispiel |
|---|---|---|---|
| Staubtrockenzeit Erichsen-Prüfgerät Typ 338 | | 5,5 Std. | 1,5 Std. |
| Pendelhärte nach König DIN 53157 | 14 Tage | 20 sek. | 49 sek. |
| | 21 Tage | 20 sek. | 79 sek. |
| 10-Tage-Trocknung + 3 Std. 100°C (künstl. Alterung) | Tiefung n. Erichsen DIN 93156 | 8,4 mm | 7,6 mm |
| | Vergilbung* | 1 | 3 |
| Schnellbewitterung Q.U.V.-Gerät ASTM G 53-77 Zykl. 4h UV/60°C | % Glanz $\times$ 20° vor Belastung | 73 | 113 |
| | % Glanz $\times$ 20° nach Belastung | 66 | 26 |
| 4h Kond./50° t: 140 Std. | Vergilbung* | 1 | 2-3 |

* 0 = reinweiß
  5 = elfenbein

0 264 070

## Ansprüche

1. Lufttrocknendes Lackbindemittel aus einem Ringöffnungsprodukt aus

(I) einem Epoxid eines ungesättigten Polymeren mit 1 bis 12 Gew.-% Epoxidsauerstoff, bezogen auf das Polymerengewicht, und

(IIa) einer ungesättigten Carbonsäure oder mehreren mit 6 bis 22 C-Atomen oder

(IIb) einem Alkohol oder mehreren mit 2 bis 6 Hydroxygruppen oder

(IIc) einem Hydroxyalkylamin oder mehreren mit mindestens einer Hydroxyalkylgruppe.

wobei die Hydroxygruppen der Alkohole bzw. Hydroxyalkylamine mit einer ungesättigten Carbonsäure oder mehreren mit 6 bis 22 C-Atomen bis zu einer OH-Zahl von weniger als 25 verestert sind und wobei das Ringöffnungsprodukt ein mittleres Molekulargewicht zwischen 1.500 und 10.000 und eine Säurezahl von 0,1 bis 20 aufweist, dadurch gekennzeichnet, daß das ungesättigte Polymer ein durch ringöffnende Polymerisation von Cycloocten oder ringöffnende Copolymerisation von Cycloocten und weiteren Cycloenen mit 5 bis 12 C-Atomen in Gegenwart von Metathesekatalysatoren gebildetes Polyoctenylen bzw. Cycloocten-Cycloen-Copolymerisat mit einem mittleren Molekulargewicht von 600 bis 3.000 ist.

2. Lufttrocknendes Lackbindemittel nach Anspruch 1, dadurch gekennzeichnet, daß die Jodzahl des Polyoctenylens bzw. des Cycloocten-Cycloen-Copolymerisats im Bereich von 80 bis 250 liegt.

3. Lufttrocknendes Lackbindemittel nach Anspruch 1, dadurch gekennzeichnet, daß die Jodzahl des Polyoctenylens bzw. des Cycloocten-Cycloen-Copolymerisats im Bereich von 150 bis 250 liegt

4. Lufttrocknendes Lackbindemittel nach einem der Ansprüche 1 bis 3, dadurch gekennzeichnet, daß der Epoxidsauerstoffgehalt des ungesättigten Polymeren 2.0 bis 8 Gew.-%, bezogen auf das Polymerengewicht, beträgt.

5. Lufttrocknendes Lackbindemittel nach einem der Ansprüche 1 bis 4, dadurch gekennzeichnet. daß das Ringöffnungsprodukt ein mittleres Molekulargewicht von 1500 bis 5000 aufweist.

6. Lufttrocknendes Lackbindemittel nach einem der Ansprüche 1 bis 5. dadurch gekennzeichnet, daß das Polyoctenylen bzw. Cycloocten-Cycloen-Copolymerisat einen trans-Gehalt von mindestens 45 % aufweist.

7. Verfahren zur Herstellung eines lufttrocknenden Lackbindemittels nach einem der Ansprüche 1 bis 6 durch Ringöffnung epoxidierter, ungesättigter Polymerer mit einer ungesättigten Carbonsäure, oder mehreren mit 6 bis 22 C-Atomen oder Alkoholen mit 2 bis 6 Hydroxygruppen oder Hydroxyalkylaminen mit mindestens einer Hydroxyalkylgruppe. wobei die bei der Verwendung der Alkohole oder Hydroxyalkylamine entstehenden Polyole mit einer ungesättigten Carbonsäure oder mehreren mit 6 bis 22 C-Atomen bis zu einer OH-Zahl von weniger als 25 verestert werden, dadurch gekennzeichnet, daß man als ungesättigtes Polymer ein durch ringöffnende Polymerisation von Cycloocten oder ringöffnende Copolymerisation von Cycloocten und weiteren Cycloenen mit 5 bis 12 Kohlenstoffatomen in Gegenwart von Metathesekatalysatoren gebildetes Polyoctenylen bzw. Cycloocten-Cycloen-Copolymerisat mit einem mittleren Molekulargewicht von 600 bis 3.000 verwendet.

8. Verwendung des lufttrocknenden Lackbindemittels nach einem der Ansprüche 1 bis 6 zusammen mit üblichen Zusatzstoffen wie Sikkativen. Pigmenten, Pigmentdispergatoren, Hilfsstoffen und gegebenenfalls Reaktivverdünnern in lösemittelarmen Lacksystemen.

9. Verwendung nach Anspruch 8, dadurch gekennzeichnet, daß man als Reaktivverdünner 1,4-cis-Polybutadien, Ester ungesättigter Fettsäuren mit Diolen wie Butendiol oder ungesättigten Fettalkoholen und/oder Ester $\alpha,\beta$-ungesättigter Carbonsäuren mit ungesättigten Fettalkoholen einsetzt.